# EUROPEAN PATENT APPLICATION

(11) **EP 4 697 464 A1**
(43) Date of publication of application: **18.02.2026**
(21) Application number: 25164443.1
(22) Date of filing: 18.03.2025
(51) Int. Cl.: H01M 50/183, H01M 50/184, H01M 50/186, H01M 50/19, H01M 50/191, H01M 50/193, H01M 50/471, H01M 50/474, H01M 50/477, H01M 50/48, H01M 50/483, H01M 50/486

(54) **SECONDARY BATTERY AND METHOD FOR MANUFACTURING THE SAME**

(30) Priority: 12.08.2024 KR 20240107757
(71) Applicant: SAMSUNG SDI CO., LTD., Yongin-si, Gyeonggi-do 17084 (KR)
(72) Inventor: BAEK, Soomin, 17084 Yongin-si (KR); JUNG, Yeonho, 17084 Yongin-si (KR)
(74) Representative: Marks & Clerk LLP

(57) **Abstract**

A secondary battery includes an electrode assembly, a case that accommodates the electrode assembly, a cap plate coupled to an opening of the case, an electrode terminal installed on the cap plate, a lead tab that electrically connects the electrode assembly to the electrode terminal, and a protective member between the electrode assembly and the case, the protective member including expanded powdery structures.

## Description

### BACKGROUND

### 1. Field

Aspects of some embodiments of the present disclosure relate to a secondary battery and a method for manufacturing the same, and to a secondary battery including a protective member formed by expansion of powdery structures and a method for manufacturing the same.

### 2. Description of the Related Art

Unlike primary batteries that are not designed to be (re)charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as hybrid vehicles or electric vehicles, and for power storage. The secondary battery may include an electrode assembly having a positive electrode and a negative electrode, a case that accommodates the electrode assembly, a terminal part connected to the electrode assembly, etc.

The above information disclosed in this Background section is for enhancement of understanding of the background of the present disclosure, and therefore, it may contain information that does not constitute related (or prior) art.

### SUMMARY

A secondary battery according to an embodiment of the present disclosure may include an electrode assembly, a case that accommodates the electrode assembly, a cap plate coupled to an opening of the case, an electrode terminal installed on the cap plate, a lead tab that electrically connects the electrode assembly to the electrode terminal, and a protective member located between the electrode assembly/the lead tab and the case, and formed by expansion of powdery structures.

In an embodiment, the cap plate may include an electrolyte injection port for injecting an electrolyte into the electrode assembly.

In an embodiment, the protective member may be formed when the powdery structures are expanded by the electrolyte injected through the electrolyte injection port and closely contact with one another.

In an embodiment, after the powdery structure is injected through the electrolyte injection port, vibration or ultrasonic waves may be applied to move the powdery structure between the electrode assembly/the lead tab and the case.

In an embodiment, the powdery structure may include one or more materials among silica gel, polymer materials, and porous materials that expand when combined with an electrolyte or moisture.

In an embodiment, the powdery structure may have a polyhedral shape.

In an embodiment, the powdery structure may be manufactured by a gel mold process in which a raw material is injected into a polyhedral mold, hardened, and dried.

In an embodiment, the powdery structure may have a size of 0.3 mm to 1.0 mm.

In an embodiment, the electrolyte may include a non-aqueous organic solvent including a carbonate, ester, ether, ketone, or alcohol solvent, an aprotic solvent, or a combination thereof, and a lithium salt.

In an embodiment, the secondary battery may have a prismatic shape.

A secondary battery module according to an embodiment of the present disclosure may include a plurality of the secondary batteries arranged and interconnected in a horizontal direction or a vertical direction.

A method for manufacturing a secondary battery according to an embodiment of the present disclosure may include: preparing an electrode assembly, electrically connecting a lead tab to the electrode assembly, electrically connecting an electrode terminal installed on the cap plate to the lead tab, accommodating the electrode assembly in a case, coupling the cap plate to an opening of the case, manufacturing a powdery structure, locating the powdery structure between the electrode assembly/the lead tab and the case, and forming a protective member by expanding the powdery structure.

In an embodiment, the method for manufacturing a secondary battery may further include forming an electrolyte injection port in the cap plate in order to inject an electrolyte into the electrode assembly.

In an embodiment, the locating of the powdery structure between the electrode assembly/the lead tab and the case may include injecting the powdery structure into the electrolyte injection port, and the forming of the protective member by expanding the powdery structure may include forming the protective member when the powdery structures are expanded by the electrolyte injected through the electrolyte injection port and closely contact with one another.

In an embodiment, the locating of the powdery structure between the electrode assembly/the lead tab and the case may include applying, after the powdery structure is injected through the electrolyte injection port, vibration or ultrasonic waves to move the powdery structure between the electrode assembly/the lead tab and the case.

In an embodiment, the manufacturing of the powdery structure may include manufacturing the powdery structure including one or more materials among silica gel, polymer materials, and porous materials that expand when combined with an electrolyte or moisture.

In an embodiment, the manufacturing of the powdery structure may include manufacturing the powdery structure having a polyhedral shape.

In an embodiment, the manufacturing of the powdery structure may include manufacturing the powdery structure by a gel mold process in which a raw material is injected into a polyhedral mold, hardened, and dried.

In an embodiment, the manufacturing of the powdery structure may include manufacturing the powdery structure having a size of 0.3 mm to 1.0 mm.

In an embodiment, the method for manufacturing a secondary battery may further include manufacturing the electrolyte including a non-aqueous organic solvent including a carbonate, ester, ether, ketone, or alcohol solvent, an aprotic solvent, or a combination thereof, and a lithium salt.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1A is a top perspective view of a prismatic secondary battery;
FIG. 1B is a cross-sectional view taken along line I-I in FIG. 1A;
FIG. 2 is a diagram schematically illustrating a secondary battery according to an embodiment of the present disclosure;
FIGS. 3A to 3E are diagrams of stages in a method for manufacturing a secondary battery according to an embodiment of the present disclosure;
FIGS. 4A to 4C are diagrams illustrating examples of a powdery structure used for a protective member of a secondary battery according to an embodiment of the present disclosure;
FIGS. 5A to 5C are diagrams of stages in a method for manufacturing a powdery structure used for a protective member of a secondary battery according to an embodiment of the present disclosure;
FIG. 6 is a diagram of a secondary battery module in which a secondary battery according to an embodiment of the present disclosure is arranged;
FIG. 7 is a diagram of a secondary battery pack including the secondary battery module illustrated in FIG. 6; and
FIG. 8 is a conceptual diagram of an automobile including the secondary battery pack illustrated in FIG. 7.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to common or dictionary meanings but instead should be understood to have meanings and concepts in agreement with the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

Examples of secondary batteries include a coin type, a cylindrical type, a prismatic type, a pouch type, etc. The present disclosure is applicable to a prismatic secondary battery. Therefore, the prismatic secondary battery will first be briefly described prior to description of embodiments of the present disclosure.

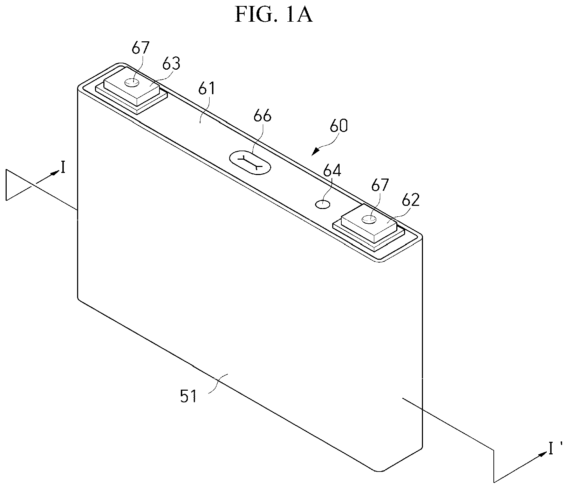

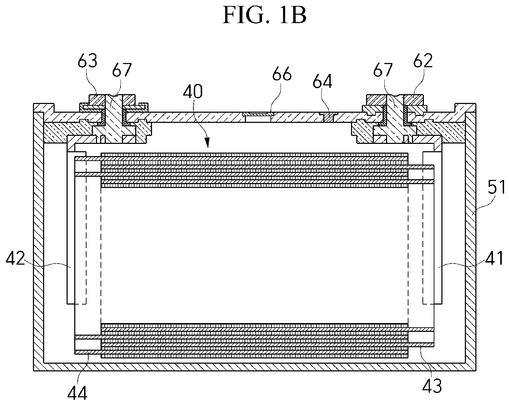

FIG. 1A is a top perspective view of the prismatic secondary battery. FIG. 1B is a cross-sectional view taken along line I-I' of FIG. 1A.

First, the external appearance of the prismatic secondary battery illustrated in FIG. 1A will be described.

Referring to FIG. 1, a casing 51 may define an overall appearance of the prismatic secondary battery, and may be made of a conductive metal, such as aluminium, aluminium alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 62 and a second terminal 63 may be electrically connected to respective positive and negative (or negative and positive) electrodes inside the casing 51, and may be installed to protrude outward through the cap plate 61. The cap plate 61 may be equipped with an electrolyte injection port 64 formed to install a sealing plug, and a vent 66 formed with a notch. The vent 66 is for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may include an electrode assembly 40, a first current collector part 41, the first terminal 62, a second current collector part 42, the second terminal 63, and the cap assembly 60.

The electrode assembly 40 may be formed by winding or stacking a laminate of a first electrode plate, a separator, and a second electrode plate, which may be in the form of a plate or a film. For example, when the electrode assembly 40 is a wound laminate, it may have a winding axis parallel to the longitudinal direction of the casing 51. In another example, the electrode assembly 40 may be of a stack type. In yet another example, the electrode assembly 40 may be a Z-stack electrode assembly in which a first electrode plate and a second electrode plate are inserted into both sides of a separator bent into a Z-stack. Furthermore, the electrode assembly 40 may include one or more electrode assemblies, which are stacked such that their long sides are adjacent to each other and accommodated in the casing. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab 43 (e.g., a first uncoated part), which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminium or aluminium alloy. The second electrode plate may include a second electrode tab 44 (e.g., a second uncoated part), which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1B for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, e.g., a polyethylene film, a polypropylene film, a polyethylene-polypropylene film, or the like.

The first electrode tab 43 of the first electrode plate and the second electrode tab 44 of the second electrode plate may extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 may be connected to the first terminal 62 and the second terminal 63, as described with reference to FIG. 1A, through terminal pins 67, respectively. For example, each of the terminal pins 67 may have an outer peripheral surface that is threaded, and may be fastened to the first terminal 62 and the second terminal 63 by screwing. In another example, the terminal pins 67 may also be coupled to the first terminal 62 and the second terminal 63 by riveting or welding.

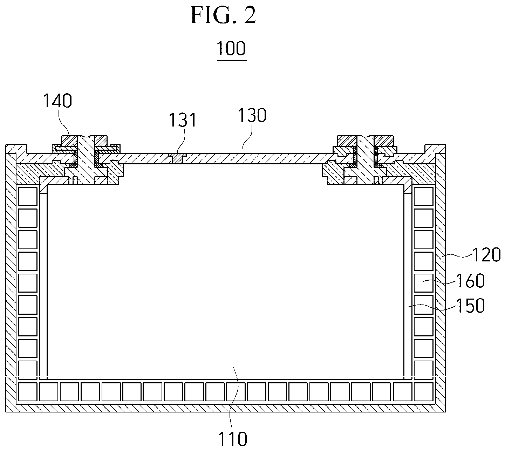

FIG. 2 is a diagram schematically illustrating a secondary battery according to an embodiment of the present disclosure.

Referring to FIG. 2, a secondary battery 100 according to an embodiment of the present disclosure may include an electrode assembly 110, a case 120 that accommodates the electrode assembly 110, a cap plate 130, electrode terminals 140, a lead tab 150, and a protective member 160 (e.g., a protector). In addition, the secondary battery 100 may include an insulating member that insulates components from each other in order to prevent short circuits.

The cap plate 130 may be coupled to an opening of the case 120. The cap plate 130 may have a substantially rectangular plate shape. The cap plate 130 may be made of the same material as the case 120. For example, the cap plate 130 may have a size corresponding (e.g., equal) to the inner size of the opening of the case 120. For example, the cap plate 130 may be coupled to the case 120 by a method such as laser welding. The cap plate 130 may be formed with terminal holes and grooves for coupling with the electrode terminals 140, vent holes for coupling with vents, and the like. The vents may be ruptured when the internal pressure of the secondary battery increases and may serve to degas gas, and may implement a general vent structure. In an embodiment, the cap plate 130 may include an electrolyte injection port 131 for injecting an electrolyte into the electrode assembly 110.

The electrode terminals 140 may be installed in the cap plate 130. In an embodiment, the electrode terminal 140 may be coupled to a terminal hole of the cap plate 130. The electrode terminal 140 may be formed by coupling a plurality of parts such as a terminal pin and a terminal plate. The electrode terminal 140 may have a positive polarity or a negative polarity.

The lead tab 150 may electrically connect the electrode assembly 110 to the electrode terminals 140. The lead tab 150 may be a conductive material having a preset thickness and may have a shape in which the plate shape is bent approximately vertically. The lead tab 150 may be formed by combining a plurality of parts such as a current collector and a subplate. The lead tab 150 may be electrically connected to the positive or negative electrode tab of the electrode assembly 110 to be electrically connected to the electrode terminals 140, e.g., the lead tab 150 may extend along lateral sides of the electrode assembly 110.

The protective member 160 may be located between the electrode assembly 110/the lead tab 150 and the case 120, and may be formed by expansion of powdery structures (e.g., the protective member 160 may include expanded powdery structures). For example, referring to FIG. 2, the protective member 160 may extend, e.g., continuously, along a bottom and lateral sides of the electrode assembly 110, such that the protective member 160 may be between (e.g., directly between) the bottom of the electrode assembly 110 and the case 120, and between (e.g., directly between) the lead tab 150 (which is on the lateral sides of the electrode assembly 110) and the case 120.

In an embodiment, the protective member 160 may be formed when the powdery structures are expanded by the electrolyte injected through the electrolyte injection port 131 and closely contact (e.g., directly contact) each other. In this way, in the secondary battery 100 according to an embodiment of the present disclosure, the powdery structures may be separately injected and evenly spread in a cell before the electrolyte injection, and may be expanded to closely contact each other after the electrolyte injection to form the protective member 160, so that a gap may be removed and an electrode plate may be protected.

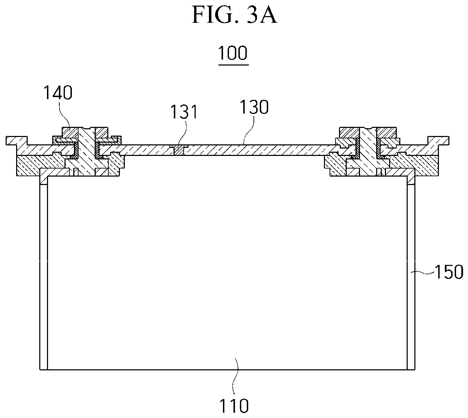

Hereinafter, a method for manufacturing the secondary battery according to an embodiment of the present disclosure is described with reference to FIGS. 3A to 3E below. FIGS. 3A to 3E are cross-sectional views of stages in a method for manufacturing a secondary battery according to an embodiment of the present disclosure.

Referring to FIG. 3A, the electrode assembly 110 may be prepared, and the lead tab 150 may be electrically connected to the electrode assembly 110, e.g., the lead tab 150 may be positioned along lateral sides of the electrode assembly 110. In an embodiment, the electrode assembly 110 and the lead tab 150 may be coupled to each other by, e.g., laser welding. Subsequently, the electrode terminal 140 installed on the cap plate 130 may be electrically connected to the lead tab 150, e.g., with the cap plate 130 positioned between the electrode assembly 110 and the electrode terminals 140. In an embodiment, the electrode terminal 140 and the lead tab 150 may be coupled to each other by, e.g., screw coupling, riveting, or laser welding.

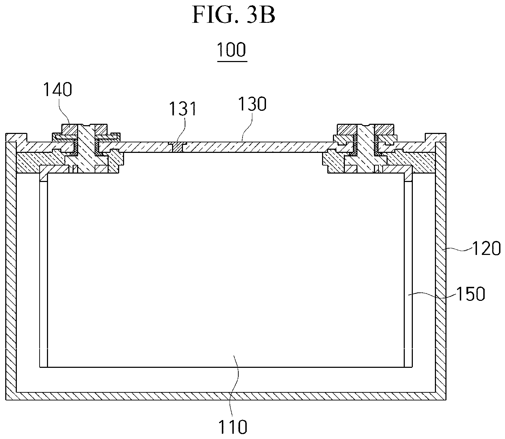

Referring to FIG. 3B, the electrode assembly 110 may be accommodated in the case 120, and the cap plate 130 may be coupled to the opening of the case 120. In an embodiment, the cap plate 130 may be coupled to the case 120 by, e.g., laser welding. The cap plate 130 may be formed with the electrolyte injection port 131 for injecting an electrolyte into the electrode assembly 110. For example, referring to FIG. 3B, a gap (e.g., an empty space) may be formed (e.g., defined) between the bottom of the electrode assembly 110 and the bottom case 120, and between the lead tab 150 (which is on lateral sides of the electrode assembly 110) and lateral sides of the case 120.

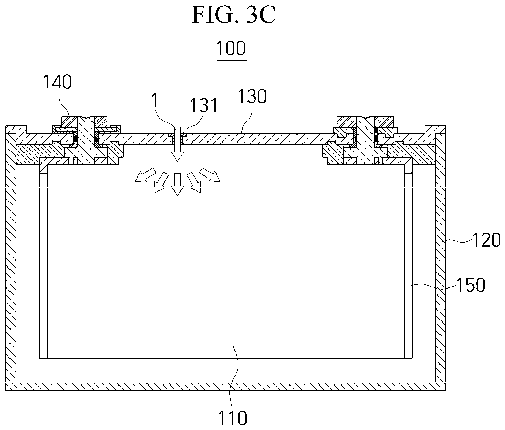

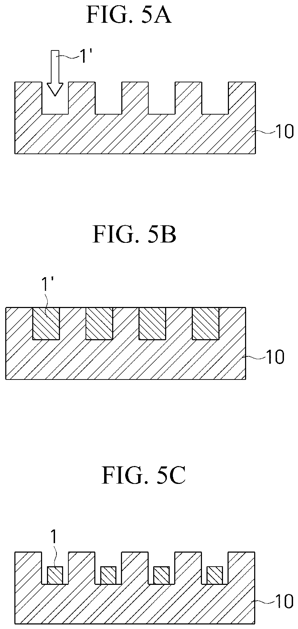

Referring to FIG. 3C, powdery structures 1 may be manufactured separately, as will be discussed with reference to FIGS. 5A-5C, and may be injected (e.g., injectable) into the electrolyte injection port 131.

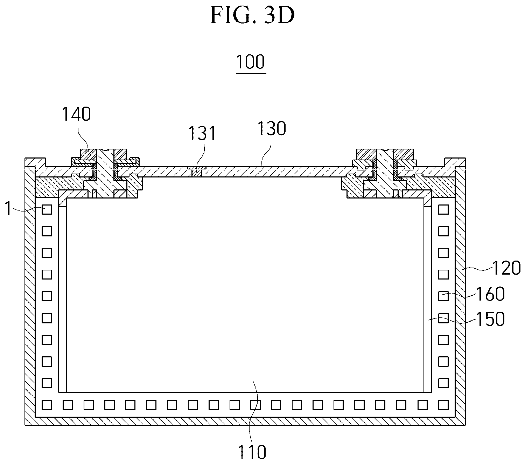

Referring to FIG. 3D, after the powdery structures 1 are injected through the electrolyte injection port 131, vibration or ultrasonic waves may be applied to move the powdery structures 1 through the electrode assembly 110 to be distributed between the electrode assembly 110 and the case 120, e.g., in the gap formed between the electrode assembly 110 and the case 120.

In detail, since the electrode assembly 110 is formed by winding or stacking a stack of a first electrode plate, a separator, and a second electrode plate formed in a plate shape or a film shape, a fine gap may be formed between the plates. After the powdery structures 1 are injected through the electrolyte injection port 131, when vibration or ultrasonic waves are applied to the powdery structures 1, the powdery structures 1 do not remain in the fine gap within the electrode assembly 110 but may be evenly spread between the electrode assembly 110/the lead tab 150 and the case 120.

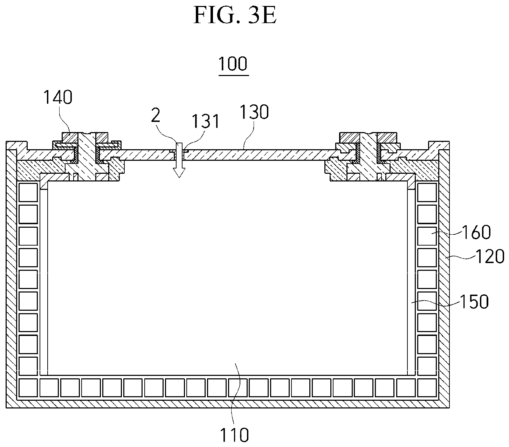

Referring to FIG. 3E, an electrolyte 2 may be injected (e.g., injectable) through the electrolyte injection port 131 into the electrode assembly 110, thereby causing the powdery structures 1 to expand (e.g., swell) and form the protective member 160. In an embodiment, when the electrolyte 2 is injected through the electrolyte injection port 131 and contacts the powdery structures 1, the powdery structures 1 may be expanded by the electrolyte 2 injected through the electrolyte injection port 131, and the expanded powdery structure 1 may closely contact with one another to form the protective member 160 (e.g., the protective member 160 may be a product of the powdery structures 1 with the electrolyte 2 that swell and agglomerate into a continuous structure that fills the gap in the case 120). The electrolyte 2 injected through the electrolyte injection port 131 may be manufactured as an electrolyte including a lithium salt and a non-aqueous organic solvent, e.g., carbonate, ester, ether, ketone, or alcohol solvent, an aprotic solvent, or a combination thereof.

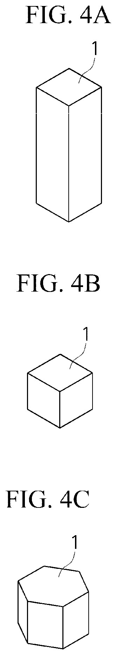

FIGS. 4A to 4C are diagrams illustrating examples of the powdery structure 1 used for the protective member 160 of the secondary battery according to an embodiment of the present disclosure.

Referring to FIGS. 4A to 4C, the powdery structure 1 used for the protective member 160 of the secondary battery according to an embodiment of the present disclosure may serve to protect the electrode plate of the electrode assembly 110 inside the secondary battery 100. In an embodiment, the powdery structure 1 may include one or more materials among silica gel, polymer materials, and porous materials that expand when combined with an electrolyte or moisture.

In an embodiment, the powdery structure 1 may have a polyhedral shape, e.g., the powdery structure 1 may include particles having a polyhedral shape. For example, the powdery structure 1 may have a shape such as a rectangular parallelepiped, as illustrated in FIG. 4A, a regular hexahedron, as illustrated in FIG. 4B, or a hexagonal column, as illustrated in FIG. 4C. The shapes of FIGS. 4A to 4C are examples of the shapes of the powdery structure 1, and may be varied to have various polyhedral shapes, e.g., a regular octahedron. The powdery structure 1 may maximize the adhesion between particles by having a polyhedral shape, e.g., maximize surface contact between particles. On the other hand, if the powdery structure 1 were to have a spherical shape, the particles may slide against each other, making it difficult for the particles to closely contact one another.

FIGS. 5A to 5C are diagrams of stages in a method for manufacturing the powdery structure 1 used for the protective member 160 of the secondary battery according to an embodiment of the present disclosure.

Referring to FIGS. 5A to 5C, the powdery structure 1 may be manufactured by a gel mold process in which a raw material 1' may be injected into a polyhedral mold, hardened, and then dried. The process of manufacturing the powdery structure 1 is as follows.

First, as illustrated in FIG. 5A, the raw material 1' may be injected into a polyhedral mold 10. Subsequently, as illustrated in FIG. 5B, the raw material 1' may be hardened in the mold 10. After the raw material 1' is hardened, referring to FIG. 5C, it may be dried to manufacture the powdery structures 1. That is, the powdery structures 1 may be molded gel structures that are molded into polyhedral shapes.

**In** an embodiment, the powdery structure 1 may have a size (e.g., a width) of 0.3 mm to 1.0 mm. When the size of the powdery structure 1 is less than 0.3 mm, the unit cost may be high when manufactured using the gel mold process as described above, thereby reducing productivity. When the size of the powdery structure 1 exceeds 1.0 mm, it may be difficult to inject the powdery structure 1 into the electrolyte injection port 131 and the powdery structure 1 may not penetrate well into gaps.

According to an embodiment of the present disclosure, the gap between the electrode assembly 110/the lead tab 150 and the case 120, which occurs in the process of manufacturing the secondary battery 100 by inserting the electrode assembly 110 into the case 120, may be filled (e.g., completely filled) with the protective member 160 formed by expansion of the powdery structures 1, thereby protecting the electrode plate of the secondary battery 100 from shock and vibration.

In addition, according to an embodiment of the present disclosure, even if a retainer is attached to the gap between the electrode assembly 110/the lead tab 150 and the case 120, the protective member 160 may be implemented in any existing or remaining gap, thereby protecting the electrode plate of the secondary battery 100 and preventing the occurrence of events such as a short circuit.

In addition, according to an embodiment of the present disclosure, the powdery structure may be manufactured to have a polyhedral shape, thereby maximizing the adhesion between particles during expansion.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel oxide, lithium cobalt oxide, lithium manganese oxide, a lithium ferrous phosphate compound, cobalt-free nickel-manganese oxide, or a combination of them.

For example, a compound that is represented as one of the following chemical formulae may be used. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃(0≤f≤2); and LiₐFePO₄(0.90≤a≤1.8).

In the chemical formulae, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly intercalating/de-intercalating with respect to lithium ions may include a carbon negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si negative electrode active material or an Sn negative electrode active material may be used as the material capable of doping and dedoping with respect to lithium. The Si negative electrode active material may be silicon, a silicon-carbon composite, SiOₓ(0<x<2), a Si alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example, the negative electrode active material layer may include the negative electrode active material of 90 wt.% to 99 wt.%, the binder of 0.5 wt.% to 5 wt.%, and the conductive material of 0 wt.% to 5 wt.%.

A non-aqueous binder, an aqueous binder, a dry binder, or a combination of them may be used as the binder. If the aqueous binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a non-aqueous organic solvent and lithium salts.

The non-aqueous organic solvent may play a role as a medium through which ions that are involved in an electrochemical reaction of a battery can move. The non-aqueous organic solvent may be a carbonate, ester, ether, ketone, or alcohol solvent, an aprotic solvent, or a combination of them. The carbonate, ester, ether, ketone, or alcohol solvent, or the aprotic solvent may be used solely, or two types or more of them may be mixed and used as the non-aqueous organic solvent. Furthermore, if the carbonate solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base. The organic matter may include a polyvinylidene fluoride heavy antibody or (meth)acrylic polymer. The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto. The organic matter and the inorganic matter may have a form in which the organic matter and the inorganic matter have been mixed in one coating layer or a form in which a coating layer including the organic matter and a coating layer including the inorganic matter have been stacked

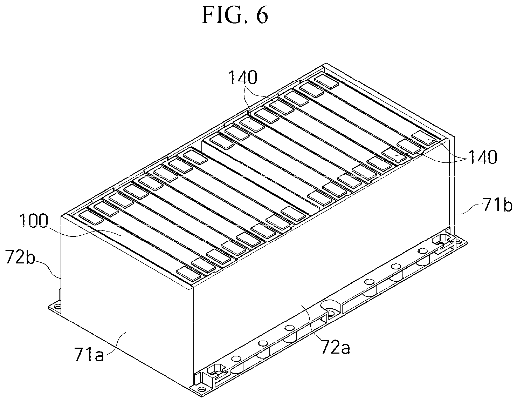

FIG. 6 is a diagram of a secondary battery module in which a plurality of the secondary batteries 100 illustrated in FIGS. 2 to 3E have been arranged according to an embodiment of the present disclosure. The secondary battery module may be manufactured by arranging and connecting multiple secondary batteries 100 laterally and/or longitudinally as the capacity of a secondary battery for driving an electric vehicle is increased.

In detail, multiple secondary batteries 100 may be arranged in a space that is formed by a pair of end plates 71a and 71b that face each other and a pair of side plates 72a and 72b that face each other. A direction in which the secondary batteries are arranged and the number of secondary batteries may be designed so that desired voltage and current specifications are obtained.

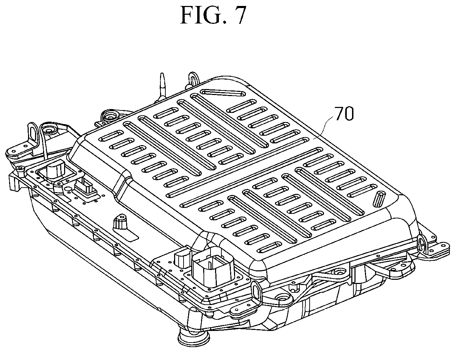

FIG. 7 is a diagram of a secondary battery pack 70 that has been constructed to apply the secondary battery module illustrated in FIG. 6 to an actual product (e.g., a vehicle). The secondary battery pack 70 may be manufactured by embedding multiple secondary battery modules in a pack housing having a form designed to mount the secondary battery pack on an actual product. The pack housing may include a fastening part that is necessary for the mounting of the secondary battery pack on the product and an electricity withdrawing part. Related elements, such as a bus bar for an electrical connection of secondary batteries, a cooling unit, and an external terminal, are not illustrated in FIG. 7, for convenience sake.

The secondary battery pack 70 may be mounted on a vehicle. The vehicle may be, e.g., an electric vehicle, a hybrid vehicle, or a plug-in hybrid vehicle. The vehicle may include a four-wheel or two-wheel drive vehicle.

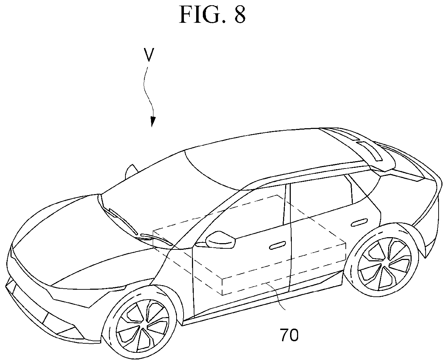

FIG. 8 is a diagram for describing a vehicle including the secondary battery pack 70 illustrated in FIG. 7. FIG. 8 illustrates that the secondary battery pack 70 according to an embodiment of the present disclosure has been mounted on a lower part of the vehicle body of a vehicle V. The vehicle V may operate by being supplied with power from the secondary battery pack 70 according to an embodiment of the present disclosure.

By way of summation and review, a secondary battery may include an electrode assembly composed of a positive electrode and a negative electrode, a case that accommodates the electrode assembly, a terminal portion connected to the electrode assembly, a lead tab connecting the terminal portion and the electrode assembly, and the like. When assembling the secondary battery, a gap may occur between the electrode assembly/lead tab and the case at the bottom and lateral sides of the secondary battery. While the gap at the bottom side may potentially disappear as an electrode plate of the electrode assembly expands during a charging process, the gap at the lateral sides may remain regardless of the charging and discharging processes. When such a gap exists, an event such as a short circuit may occur when the electrode plate of the electrode assembly moves during an external impact and comes into contact with a cap and a current collector.

In order to reduce such a gap, attempts have been made to provide a retainer at the bottom and short side of the case of the secondary battery cell with multiple internal insulating tapes. However, since the gap may not be completely filled, a risk of a short circuit may remain.

In contrast, the present disclosure provides a secondary battery including a protective member formed by expansion of powdery structures and a method for manufacturing the same. That is, according to an embodiment of the present disclosure, a gap between an electrode assembly/a lead tab and a case, which occurs in a process of manufacturing a secondary battery by inserting the electrode assembly into the case, is filled with a protective member formed by expansion of powdery structures, thereby protecting the electrode plate of the secondary battery from shock and vibration.

In addition, according to an embodiment of the present disclosure, even if a retainer is attached to the gap between the electrode assembly/the lead tab and the case, the gap may be eliminated or substantially minimized by using the protective member formed of the powdery structure, thereby protecting the electrode plate of the secondary battery and preventing the occurrence of events such as a short circuit. In addition, according to an embodiment of the present disclosure, the powdery structure is manufactured to have a polyhedral shape, thereby maximizing the adhesion between particles during expansion.

Example embodiments have been disclosed herein, and although specific terms are employed, they are used and are to be interpreted in a generic and descriptive sense only and not for purpose of limitation. In some instances, as would be apparent to one of ordinary skill in the art as of the filing date of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
Clause 1. A secondary battery comprising:
   an electrode assembly;
   a case that accommodates the electrode assembly;
   a cap plate coupled to an opening of the case;
   an electrode terminal installed on the cap plate;
   a lead tab that electrically connects the electrode assembly to the electrode terminal; and
   a protective member located between the electrode assembly/the lead tab and the case, and formed by expansion of powdery structures.
Clause 2. The secondary battery of clause 1, wherein the cap plate comprises an electrolyte injection port for injecting an electrolyte into the electrode assembly.
Clause 3. The secondary battery of clause 2, wherein the protective member is formed when the powdery structures are expanded by the electrolyte injected through the electrolyte injection port and closely contact with one another.
Clause 4. The secondary battery of clause 3, wherein after the powdery structure is injected through the electrolyte injection port, vibration or ultrasonic waves are applied to move the powdery structure between the electrode assembly/the lead tab and the case.
Clause 5. The secondary battery of any one of clauses 2 to 4, wherein the powdery structure comprises one or more materials among silica gel, polymer materials, and porous materials that expand when combined with an electrolyte or moisture.
Clause 6. The secondary battery of any one of clauses 1 to 5, wherein the powdery structure has a polyhedral shape.
Clause 7. The secondary battery of clause 6, wherein the powdery structure is manufactured by a gel mold process in which a raw material is injected into a polyhedral mold, hardened, and dried.
Clause 8. The secondary battery of any one of clauses 1 to 7, wherein the powdery structure has a size of 0.3 mm to 1 mm.
Clause 9. The secondary battery of any one of clauses 2 to 8, wherein the electrolyte comprises a non-aqueous organic solvent including a carbonate-based, ester-based, ether-based, ketone-based, or alcohol-based solvent, an aprotic solvent, or a combination thereof, and a lithium salt.
Clause 10. The secondary battery of any one of clauses 1 to 9, wherein the secondary battery has a prismatic shape.
Clause 11. A secondary battery module in which a plurality of the secondary batteries of any one of clauses 1 to 10 are arranged and interconnected in a horizontal or vertical direction.
Clause 12. A method for manufacturing a secondary battery, comprising:
   preparing an electrode assembly;
   electrically connecting a lead tab to the electrode assembly;
   electrically connecting an electrode terminal installed on the cap plate to the lead tab;
   accommodating the electrode assembly in a case;
   coupling the cap plate to an opening of the case;
   manufacturing a powdery structure;
   locating the powdery structure between the electrode assembly/the lead tab and the case; and
   forming a protective member by expanding the powdery structure.
Clause 13. The method for manufacturing a secondary battery of clause 12, further comprising:
   forming an electrolyte injection port in the cap plate in order to inject an electrolyte into the electrode assembly.
Clause 14. The method for manufacturing a secondary battery of clause 13, wherein the locating of the powdery structure between the electrode assembly/the lead tab and the case comprises:
   injecting the powdery structure into the electrolyte injection port, and
   the forming of the protective member by expanding the powdery structure comprises:
      forming the protective member when the powdery structures are expanded by the electrolyte injected through the electrolyte injection port and closely contact with one another.
Clause 15. The method for manufacturing a secondary battery of clause 14, wherein the locating of the powdery structure between the electrode assembly/the lead tab and the case comprises:
   applying, after the powdery structure is injected through the electrolyte injection port, vibration or ultrasonic waves to move the powdery structure between the electrode assembly/the lead tab and the case.
Clause 16. The method for manufacturing a secondary battery of any one of clauses 13 to 15, wherein the manufacturing of the powdery structure comprises:
   manufacturing the powdery structure comprising one or more materials among silica gel, polymer materials, and porous materials that expand when combined with an electrolyte or moisture.
Clause 17. The method for manufacturing a secondary battery of any one of clauses 12 to 16, wherein the manufacturing of the powdery structure comprises:
   manufacturing the powdery structure having a polyhedral shape.
Clause 18. The method for manufacturing a secondary battery of clause 17, wherein the manufacturing of the powdery structure comprises:
   manufacturing the powdery structure by a gel mold process in which a raw material is injected into a polyhedral mold, hardened, and dried.
Clause 19. The method for manufacturing a secondary battery of any one of clauses 12 to 18, wherein the manufacturing of the powdery structure comprises:
   manufacturing the powdery structure having a size of 0.3 mm to 1 mm.

## Claims

1. A secondary battery, comprising:
an electrode assembly;
a case that accommodates the electrode assembly;
a cap plate coupled to an opening of the case;
an electrode terminal installed on the cap plate;
a lead tab that electrically connects the electrode assembly to the electrode terminal; and
a protective member between the electrode assembly and the case, the protective member including expanded powdery structures.

2. The secondary battery as claimed in claim 1, wherein the cap plate includes an electrolyte injection port, an electrolyte being injectable through the electrolyte injection port.

3. The secondary battery as claimed in claim 2, wherein the expanded powdery structures of the protective member include a product of powdery structures with some of the electrolyte that contact each other into a continuous structure.

4. The secondary battery as claimed in claim 3, wherein the continuous structure fills a gap between the electrode assembly and the case and between the lead tab and the case.

5. The secondary battery as claimed in any one of claims 2 to 4, wherein:
(i) the expanded powdery structures include at least one of silica gel, polymer materials, and porous materials that expand when combined with the electrolyte; and/or
(ii) the electrolyte includes a non-aqueous organic solvent having a carbonate, ester, ether, ketone, or alcohol solvent, an aprotic solvent, or a combination thereof, and a lithium salt.

6. The secondary battery as claimed in any one of claims 1 to 5, wherein each of the expanded powdery structures has a polyhedral shape, optionally wherein each of the expanded powdery structures includes molded gel structures molded into the polyhedral shape.

7. The secondary battery as claimed in any one of claims 1 to 6, wherein:
(i) each of the expanded powdery structures has a size of 0.3 mm to 1.0 mm; and/or
(ii) the secondary battery has a prismatic shape.

8. A secondary battery module comprising a plurality of the secondary batteries as claimed in any one of claims 1 to 7, the plurality of the secondary batteries being arranged and interconnected in a horizontal direction or a vertical direction.

9. A method for manufacturing a secondary battery, the method comprising:
preparing an electrode assembly;
electrically connecting a lead tab to the electrode assembly;
electrically connecting an electrode terminal installed on a cap plate to the lead tab;
accommodating the electrode assembly in a case;
coupling the cap plate to an opening of the case;
manufacturing powdery structures;
inserting the powdery structures between the electrode assembly and the case; and
forming a protective member by expanding the powdery structures.

10. The method for manufacturing a secondary battery as claimed in claim 9, further comprising forming an electrolyte injection port in the cap plate.

11. The method for manufacturing a secondary battery as claimed in claim 10, wherein:
inserting the powdery structures between the electrode assembly and the case includes injecting the powdery structures into the electrolyte injection port; and
forming the protective member by expanding the powdery structures includes injecting an electrolyte through the electrolyte injection port into the electrode assembly, such that the powdery structures contact the electrolyte and expand to contact one another.

12. The method for manufacturing a secondary battery as claimed in claim 11, wherein:
(i) inserting the powdery structures between the electrode assembly and the case includes applying, after the powdery structures are injected through the electrolyte injection port, vibration or ultrasonic waves to move the powdery structures into a region between the electrode assembly and the case; and/or
(ii) the electrolyte is a non-aqueous organic solvent including a carbonate, ester, ether, ketone, or alcohol solvent, an aprotic solvent, or a combination thereof, and a lithium salt.

13. The method for manufacturing a secondary battery as claimed in any one of claims 9 to 12, wherein the powdery structures are manufactured of at least one of silica gel, polymer materials, and porous materials that expand when combined with an electrolyte.

14. The method for manufacturing a secondary battery as claimed in any one of claims 9 to 3, wherein manufacturing the powdery structures includes
manufacturing the powdery structures to have a polyhedral shape, optionally wherein manufacturing the powdery structure includes manufacturing the powdery structures by a gel mold process in which a raw material is injected into a polyhedral mold, hardened, and dried.

15. The method for manufacturing a secondary battery as claimed in any one of claims 9 to 14, wherein manufacturing the powdery structures includes manufacturing the powdery structures to have a size of 0.3 mm to 1.0 mm.
